# EUROPEAN PATENT APPLICATION

(11) **EP 3 674 581 A1**
(43) Date of publication of application: **01.07.2020**
(21) Application number: 19217406.8
(22) Date of filing: 18.12.2019
(51) Int. Cl.: F16H 23/10, F16H 1/32, F16H 57/00, F16D 1/08

(54) **GEAR UNIT**

(30) Priority: 27.12.2018 JP 2018244648; 27.12.2018 JP 2018244885
(71) Applicant: JTEKT Corporation, Osaka-shi Osaka 542-8502 (JP)
(72) Inventor: TASHIRO, Takashi, Osaka-shi,, Osaka 542-8502 (JP)
(74) Representative: Winter, Brandl, Fürniss, Hübner, Röss, Kaiser, Polte - Partnerschaft mbB

(57) **Abstract**

A gear unit (1; 10) includes: a first gear (110) and a second gear (120) which are disposed about a first axis (La); an input shaft (150) disposed so as to be rotatable about the first axis (La); and an intermediate gear (130) disposed between the first gear (110) and the second gear (120). The intermediate gear (130) is disposed about a second axis (Lb) tilted with respect to the first axis (La). The intermediate gear (130) includes an inner ring portion (131) and an outer ring portion (135) disposed so as to be rotatable relative to the inner ring portion (131). The inner ring portion (131) is configured to be rotated with rotation of the input shaft (150). The outer ring portion (135) is configured to mesh with the first gear (110) and the second gear (120).

## Description

### BACKGROUND OF THE INVENTION

### 1. Field of the Invention

The invention relates to gear units including a plurality of gears.

### 2. Description of Related Art

Japanese Unexamined Patent Application Publication No. 2014-35016 (JP 2014-35016 A) discloses a transmission ratio variable device that transmits the sum of rotation of an input shaft and rotation based on driving of a motor to an output shaft by using a differential mechanism. This transmission ratio variable device includes an oscillating gear mechanism as the differential mechanism. The oscillating gear mechanism includes a first gear that is rotated with the input shaft, a fourth gear that is rotated with an output shaft, and an oscillating gear. The oscillating gear includes a second gear meshing with the first gear and a third gear meshing with the fourth gear and is rotated about an axis tilted with respect to the axis of the first and fourth gears. With this configuration, the transmission ratio, which is the ratio between the input rotation angle and the output rotation angle, can be changed on the same axis.

### SUMMARY OF THE INVENTION

In such a gear unit having an oscillating gear (more specifically, a gear that makes a precession motion) as the above oscillating gear mechanism, a gear that is rotated about a second axis tilted with respect to a first axis is disposed between two gears that are rotated about the first axis. For example, an input shaft is fixed to this gear. The input shaft has a main shaft portion whose central axis is a first axis and a cylindrical tilted shaft portion whose central axis is a second axis. The cylindrical tilted shaft portion is formed on a part of the main shaft portion. For example, when producing such a shaft body, namely a shaft body in which a main shaft portion and a tilted shaft portion are formed integrally, a first turning process is performed on a metal body to accurately form the tilted shaft portion. The rotation shaft of the metal body is then changed for a second turning process, and the second turning process is performed to accurately form the main shaft portion. The production process of this shaft body includes the above complicated process, and it is therefore not easy to produce a shaft body to be connected to a gear that makes a precession motion. This is a factor that affects, for example, improvement in production efficiency of gear units.

The invention provides a gear unit including a gear that makes a precession motion and capable of being efficiently produced.

An aspect of the present invention is a gear unit. The gear unit includes: a first gear and a second gear which are disposed about a first axis; an input shaft disposed so as to be rotatable about the first axis; and an intermediate gear disposed between the first gear and the second gear. The intermediate gear is disposed about a second axis tilted with respect to the first axis. The intermediate gear includes an inner ring portion and an outer ring portion disposed so as to be rotatable relative to the inner ring portion. The inner ring portion is configured to be rotated with rotation of the input shaft. The outer ring portion is configured to mesh with the first gear and the second gear.

The gear unit may further include a tilted shaft member that is a separate member from the input shaft and that is disposed between an inner peripheral surface of the inner ring portion and the input shaft. The tilted shaft member may include a tilted outer peripheral surface that is an outer peripheral surface parallel to the second axis, and may be configured to support the inner peripheral surface by the tilted outer peripheral surface to cause the intermediate gear to make a precession motion with rotation of the input shaft.

The gear unit may further include a third tilted member and a fourth tilted member that are attached to the input shaft. The third tilted member and the fourth tilted member may contact opposite surfaces of the inner ring portion in a direction of the second axis. The third tilted member and the fourth tilted member may be configured to hold the inner ring portion between the third tilted member and the fourth tilted member in such an attitude that the second axis is a central axis of the inner ring portion.

The invention thus provides a gear unit including a gear that makes a precession motion and capable of being efficiently produced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view schematically illustrating the configuration of a gear unit according to a first embodiment;
FIG. 2 is a plan view schematically illustrating the configuration of a first gear according to the first embodiment;
FIG. 3 is a plan view schematically illustrating the configuration of a second gear according to the first embodiment;
FIG. 4 is a plan view schematically illustrating the configuration of an intermediate gear according to the first embodiment;
FIG. 5 is an exploded sectional view of a part of the gear unit according to the first embodiment;
FIG. 6 shows side views of a tilted shaft member, a first auxiliary member, and a second auxiliary member according to the first embodiment;
FIG. 7 is a perspective view illustrating the appearance of the first tilted member or the second tilted member according to the first embodiment;
FIG. 8 is a perspective view illustrating the appearance of the first auxiliary member or the second auxiliary member according to the first embodiment;
FIG. 9 is a sectional view schematically illustrating the configuration of a gear unit according to a second embodiment;
FIG. 10 is a plan view schematically illustrating the configuration of a first gear according to the second embodiment;
FIG. 11 is a plan view schematically illustrating the configuration of a second gear according to the second embodiment;
FIG. 12 is a plan view schematically showing the configuration of an intermediate gear according to the second embodiment;
FIG. 13 is a first exploded sectional view of the gear unit according to the second embodiment;
FIG. 14 is a second exploded sectional view of the gear unit according to the second embodiment;
FIG. 15 is a third exploded sectional view of the gear unit according to the second embodiment;
FIG. 16 shows plan views of a third tilted member and a fourth tilted member according to the second embodiment;
FIG. 17 is a perspective view illustrating the appearance of the third tilted member or the fourth tilted member according to the second embodiment;
FIG. 18A is an enlarged view of a tapered part of a first flange portion according to the second embodiment;
FIG. 18B is an enlarged view of a tapered part of a second flange portion according to the second embodiment; and
FIG. 18C is an enlarged view of a tapered part of an intermediate flange portion according to the second embodiment.

### DETAILED DESCRIPTION OF EMBODIMENTS

Embodiments and modifications thereof will be described in detail below with reference to the accompanying drawings. The embodiments described below illustrate generic or specific examples. The numerical values, shapes, materials, components, arrangement and connection of the components, the order of steps of a production process, etc. described in the following embodiments are by way of example only and are not intended to limit the invention. Of the components in the following embodiments, those components which are not recited in the independent claim defining the most generic concept are described as optional components.

The figures are schematic illustrations that include, as necessary, emphasis, omission, and ratio adjustment in order to describe the present invention, and the illustrations may be different from the actual shape, positional relationship, and ratio. Expressions indicating relative directions and attitudes such as parallel and perpendicular are sometimes used in the following embodiments and claims. To be exact, these expressions include the case where the directions or the attitudes are different from the actual directions or attitudes. For example, two directions being parallel to each other not only means that the two directions are exactly parallel to each other but also means that the two directions are substantially parallel to each other, namely the two directions are parallel to each other with, for example, a variation of about a few percent.

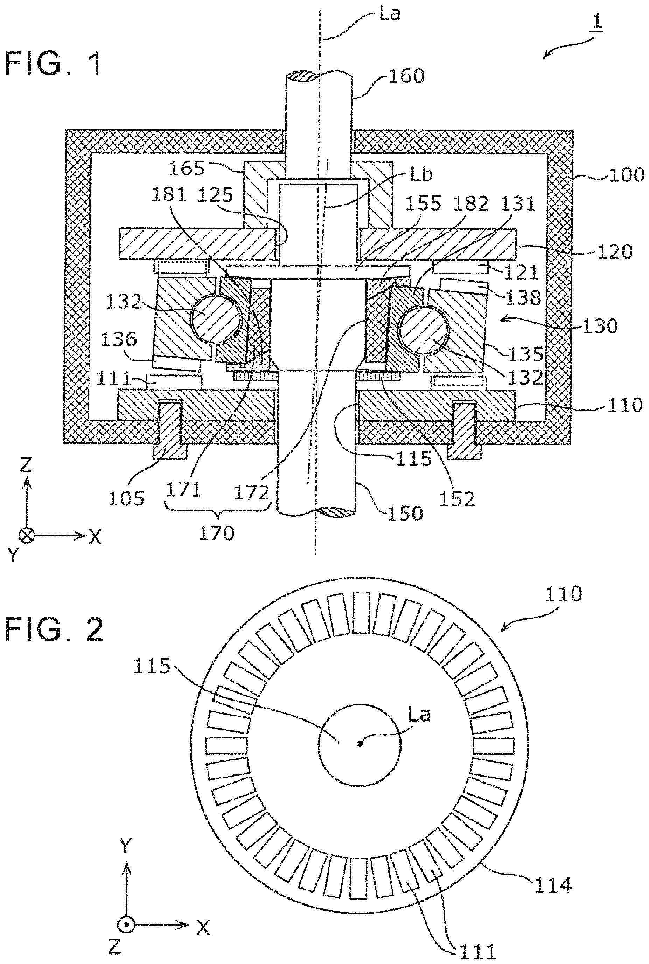

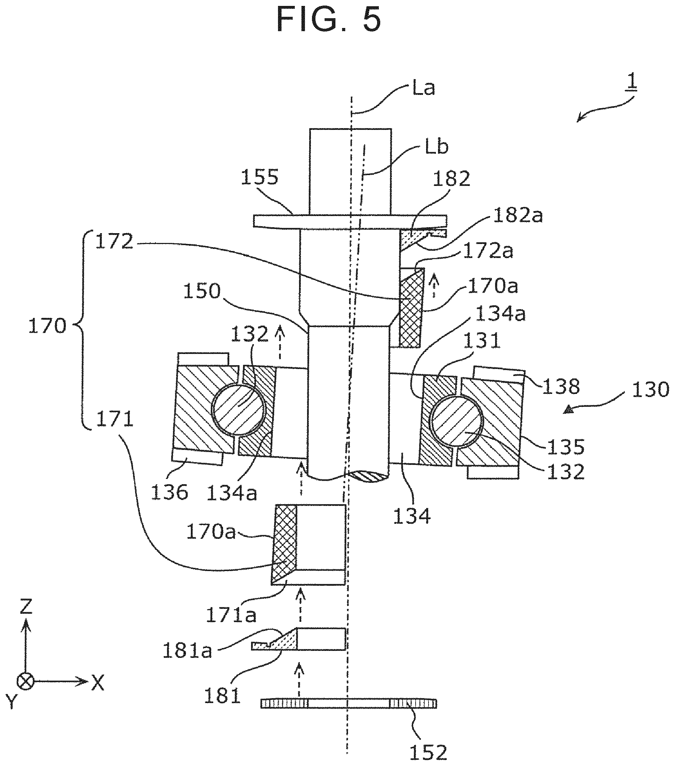

First, the general configuration of a gear unit 1 according to a first embodiment will be described with reference to FIGS. 1 to 4. FIG. 1 is a sectional view schematically illustrating the configuration of the gear unit 1 according to the first embodiment. Regarding an input shaft 150, an output shaft 160, and the teeth of each gear (110, 120, 130), not their sectional views but their side views are shown in FIG. 1. The basic structure of the gear unit 1 is simply illustrated in FIG. 1, and elements such as bearing units that rotatably support the input shaft 150 and the output shaft 160 are not shown in FIG. 1. The same applies to FIG. 5 described later.

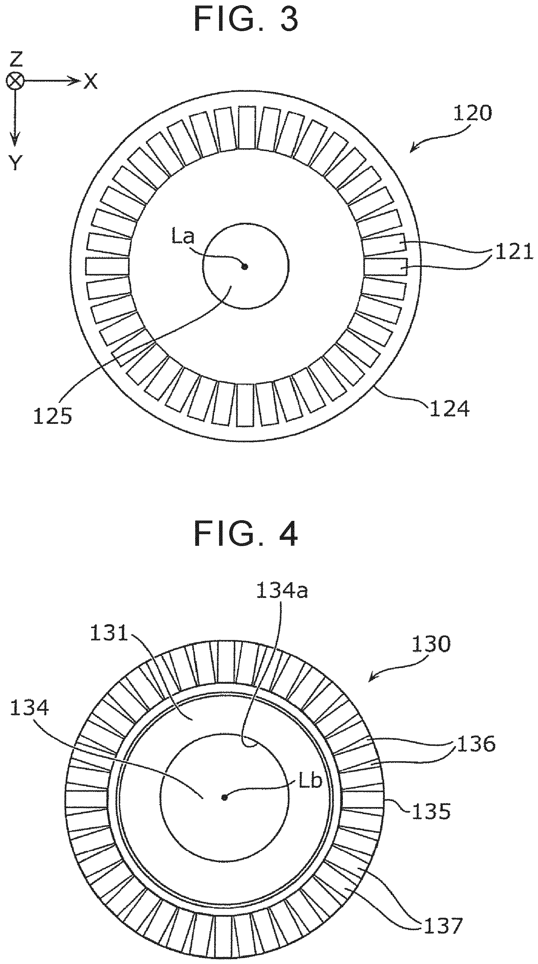

FIG. 2 is a plan view schematically illustrating the configuration of a first gear 110 according to the first embodiment. FIG. 3 is a plan view schematically illustrating the configuration of a second gear 120 according to the first embodiment. FIG. 4 is a plan view schematically illustrating the configuration of an intermediate gear 130 according to the first embodiment.

The gear unit 1 is a device that changes a received rotation angle, rotational force, or rotational speed and outputs the changed rotation angle, rotational force, or rotational speed. In the present embodiment, the gear unit 1 functions as a reduction gear that rotates the output shaft 160 at a lower rotational speed than that of the input shaft 150.

As shown in FIG. 1, the gear unit 1 includes the first gear 110, the second gear 120, and the intermediate gear 130. The first gear 110 and the second gear 120 are disk-shaped gears disposed about a first axis La. The intermediate gear 130 is a disc-shaped gear disposed about a second axis Lb between the first gear 110 and the second gear 120. The second axis Lb is tilted with respect to the first axis La. The intermediate gear 130 meshes with the first gear 110 and the second gear 120 so as to rotate one of the first and second gears 110, 120 differentially with respect to the other.

As shown in FIGS. 1 and 2, the first gear 110 has a plurality of first teeth 111 facing the intermediate gear 130. Specifically, the first gear 110 has a first body portion 114 as its body, and the first body portion 114 has the first teeth 111 formed on its surface facing the intermediate gear 130. The first teeth 111 are formed next to each other so as to form an annular pattern. The first body portion 114 has a through hole 115 in its center, and the input shaft 150 extends through the through hole 115.

As shown in FIGS. 1 and 3, the second gear 120 has a plurality of second teeth 121 facing the intermediate gear 130. Specifically, the second gear 120 has a second body portion 124 as its body, and the second body portion 124 has the second teeth 121 formed on its surface facing the intermediate gear 130. The second teeth 121 are formed next to each other so as to form an annular pattern. The second body portion 124 has a through hole 125 in its center, and the input shaft 150 extends through the through hole 125.

As shown in FIGS. 1 and 4, the intermediate gear 130 has a plurality of first intermediate teeth 136 and a plurality of second intermediate teeth 138. The first intermediate teeth 136 mesh with the first teeth 111, and the second intermediate teeth 138 mesh with the second teeth 121. More specifically, the intermediate gear 130 has an inner ring portion 131 and an outer ring portion 135. The inner ring portion 131 is rotated with rotation of the input shaft 150, and the outer ring portion 135 is disposed so as to be rotatable relative to the inner ring portion 131. In the present embodiment, the outer ring portion 135 is rotatably supported by the inner ring portion 131 via a plurality of bearings 132. As shown in FIG. 1, the first intermediate teeth 136 and the second intermediate teeth 138 are formed in the outer ring portion 135. In the present embodiment, each of the first intermediate teeth 136 and the second intermediate teeth 138 is a protrusion between two recesses formed in the outer ring portion 135. For example, each of the first intermediate teeth 136 is a protrusion between two recesses 137 (see FIG. 4) each having a shape corresponding to the first tooth 111.

FIG. 4 shows only the structure on the first gear 110 side of the intermediate gear 130. Since the intermediate gear 130 has the same structure on both the first gear 110 side and the second gear 120 side, the structure on the second gear 120 side of the intermediate gear 130 is not shown in the figure.

In the gear unit 1 having a plurality of gears as described above, the intermediate gear 130 is fixed to the input shaft 150 that rotates about the first axis La. Specifically, the gear unit 1 includes a tilted shaft member 170 that is a separate member from the input shaft 150. The inner ring portion 131 of the intermediate gear 130 has a central opening 134, and as shown in FIG. 1, the tilted shaft member 170 is disposed between an inner peripheral surface 134a of the central opening 134 (see FIG. 4) and the input shaft 150. The intermediate gear 130 is fixed to the input shaft 150 via the tilted shaft member 170 such that the intermediate gear 130 is in a tilted attitude with respect to the input shaft 150 that rotates about the first axis La. Accordingly, when the input shaft 150 is rotated, the intermediate gear 130 meshes with the first gear 110 and the second gear 120 while making a precession motion. The intermediate gear 130 that makes a precession motion as described above is sometimes called as, for example, an "oscillating gear."

In the present embodiment, the tilted shaft member 170 has a first tilted member 171 and a second tilted member 172. A first auxiliary member 181 is disposed in contact with the first tilted member 171, and a second auxiliary member 182 is disposed in contact with the second tilted member 172. As shown in FIG. 1, the first auxiliary member 181, the tilted shaft member 170, and the second auxiliary member 182 together with the inner ring portion 131 of the intermediate gear 130 are interposed and fixed between a lock nut 152 screwed on the input shaft 150 and a flange portion 155 of the input shaft 150. The tilted shaft member 170 and its surrounding structure will be described in detail later with reference to FIGS. 5 to 8.

In the present embodiment, the first gear 110, the second gear 120, and the intermediate gear 130 are accommodated in a housing 100, and the first gear 110 is fixed to the housing 100 with, for example, bolts 105 (see FIG. 1). The output shaft 160 is fixed to the second gear 120 via a connecting member 165, and the second gear 120 together with the output shaft 160 is rotatably held by the housing 100.

In the present embodiment, Z1 < Zm1 and Zm1 = Zm2 = Z2, where Z1 represents the number of first teeth 111, Z2 represents the number of second teeth 121, Zm1 represents the number of first intermediate teeth 136, and Zm2 represents the number of second intermediate teeth 138. For example, Z1 = 38 and Zm1 = Zm2 = Z2 = 40.

In this case, when the input shaft 150 is rotated, the intermediate gear 130 is rotated while maintaining its tilted attitude as shown in FIG. 1. At this time, the intermediate gear 130 is rotated while shifting its meshing position with the first gear 110 in the circumferential direction of the first gear 110. As described above, the number Zm1 of first intermediate teeth 136 of the intermediate gear 130 is larger than the number Z1 of first teeth 111 of the first gear 110 by 2. Accordingly, when the input shaft 150 makes one full rotation, the phase of the outer ring portion 135 having the first intermediate teeth 136 advances by the amount corresponding to the difference between Zm1 and Z1 (2). That is, when the input shaft 150 is rotated by 360°, the outer ring portion 135 is rotated by 360° × 2/40 = 18°. Accordingly, the outer ring portion 135 makes one full rotation for every 20 full rotations of the input shaft 150.

The number Zm2 of the second intermediate teeth 138 of the outer ring portion 135 is the same as the number Z2 of the second teeth 121 of the second gear 120 (40), and the second gear 120 is rotated in phase with the outer ring portion 135. That is, when the outer ring portion 135 makes one full rotation, the second gear 120 also makes one full rotation together with the outer ring portion 135. That is, for every 20 full rotations of the input shaft 150, the outer ring portion 135 makes one full rotation, and the second gear 120 and the output shaft 160 also make one full rotation together with the outer ring portion 135. The second gear 120 is thus rotated differentially with respect to the first gear 110. That is, the gear unit 1 of the present embodiment is a reduction gear in which the input shaft 150 and the output shaft 160 are arranged coaxially and the reduction ratio is 1/20.

For example, the gear unit 1 with this configuration is used as a power assist reduction gear in a power steering system. In this case, a shaft of a power assist motor is disposed on the first axis La that is the rotation axis of the input shaft 150, and the shaft of the motor and the input shaft 150 are connected. For example, the output shaft 160 is disposed so as to apply a rotational driving force via a gear etc. or directly to a steering shaft connected to a steering wheel.

The gear unit 1 thus reduces the speed of rotation on the same axis as the shaft of the motor. Accordingly, in the case where the gear unit 1 is used as, for example, a power assist reduction gear in a column assist power steering system, a power assist motor can be disposed parallel to, or parallel to and coaxially with, the steering shaft. For example, this configuration reduces the possibility that the power assist motor may reduce flexibility in arrangement of instruments etc. around a steering column. Applications of the gear unit 1 are not limited to power assist applications for power steering systems. The gear unit 1 may be used as a device for changing the transmission ratio in various devices or machines. For example, the gear unit 1 may be used as a power assist or driving reduction gear in a moving body such as a bicycle or a motorcycle, or as a reduction gear for driving lifting and lowering, moving, etc. of an object in industrial machinery.

In the gear unit 1 with this configuration, the intermediate gear 130 that rotates one of the first gear 110 and the second gear 120 differentially with respect to the other is fixed to the input shaft 150 via the tilted shaft member 170 such that the intermediate gear 130 is in a tilted attitude with respect to the input shaft 150, as described above. The tilted shaft member 170 and its surrounding structure will further be described with reference to FIGS. 5 to 8.

FIG. 5 is an exploded sectional view of a part of the gear unit 1 according to the first embodiment. Specifically, FIG. 5 shows only the sectional or side views of the input shaft 150, the intermediate gear 130, the tilted shaft member 170, the first auxiliary member 181, the second auxiliary member 182, and the lock nut 152.

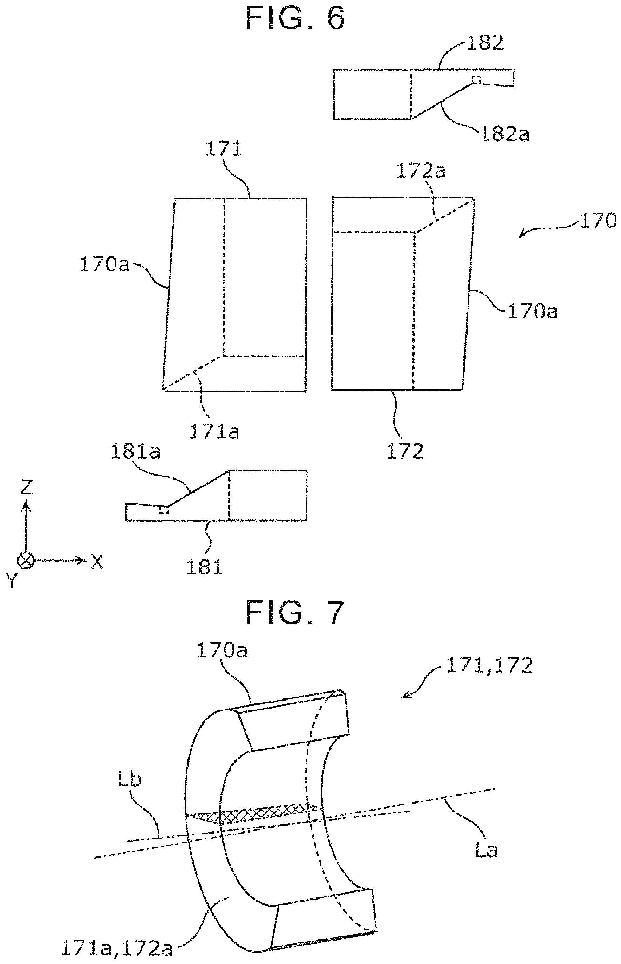

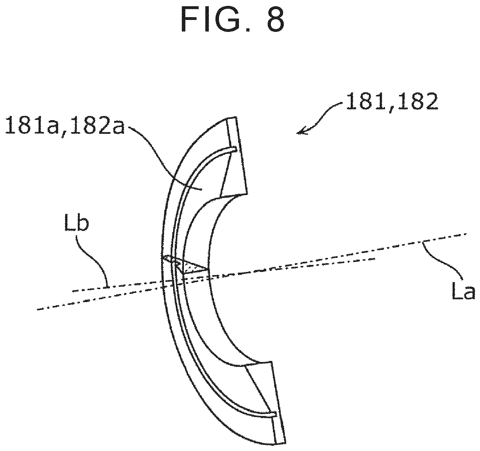

FIG. 6 shows side views of the tilted shaft member 170, the first auxiliary member 181, and the second auxiliary member 182 according to the first embodiment (as viewed in the Y-axis direction). FIG. 7 is a perspective view illustrating the appearance of the first tilted member 171 or the second tilted member 172 according to the first embodiment. FIG. 8 is a perspective view illustrating the appearance of the first auxiliary member 181 or the second auxiliary member 182 according to the first embodiment. In the present embodiment, the first tilted member 171 and the second tilted member 172 are components of similar shapes and sizes, and the first auxiliary member 181 and the second auxiliary member 182 are components of similar shapes and sizes. Accordingly, FIG. 7 shows only one of the first tilted member 171 and the second tilted member 172, and FIG. 8 shows only one of the first auxiliary member 181 and the second auxiliary member 182. The section shown hatched in FIG. 7 corresponds to the section of the first tilted member 171 or the second tilted member 172 shown in FIG. 5. The section shown hatched in FIG. 8 corresponds to the section of the first auxiliary member 181 or the second auxiliary member 182 shown in FIG. 5.

As shown in FIGS. 1 and 5 to 8 described above, the gear unit 1 according to the present embodiment includes the first gear 110, the second gear 120, the input shaft 150, and the intermediate gear 130. The first gear 110 and the second gear 120 are disposed about the first axis La. The input shaft 150 is disposed so as to be rotatable about the first axis La. The intermediate gear 130 is disposed about the second axis Lb between the first gear 110 and the second gear 120, and the second axis Lb is tilted with respect to the first axis La. The intermediate gear 130 includes the inner ring portion 131 and the outer ring portion 135 that meshes with the first gear 110 and the second gear 120. The inner ring portion 131 is rotated with rotation of the input shaft 150, and the outer ring portion 135 is disposed so as to be rotatable relative to the inner ring portion 131.

The gear unit 1 further includes the tilted shaft member 170 that is a separate member from the input shaft 150. The tilted shaft member 170 is disposed between the inner peripheral surface 134a of the central opening 134 of the inner ring portion 131 and the input shaft 150. As shown in, for example, FIG. 5, the tilted shaft member 170 disposed on the input shaft 150 as shown in FIG. 1 supports the inner peripheral surface 134a by its tilted outer peripheral surfaces 170a that are outer peripheral surfaces parallel to the second axis Lb. The tilted shaft member 170 can thus cause the intermediate gear 130 to make a precession motion with rotation of the input shaft 150.

According to this configuration, the tilted shaft member 170, which is a separate component from the input shaft 150, is disposed between the input shaft 150 and the inner peripheral surface 134a of the inner ring portion 131. The input shaft 150 can therefore be formed only by the shape of rotational symmetry about the first axis La. Accordingly, unlike the case where a shaft body in which a main shaft portion and a tilted shaft portion are formed integrally, such as the conventional shaft body to which an oscillating gear is fixed, is produced, the input shaft 150 can be accurately produced by a series of turning processes without changing the rotation axis of a metal body between the turning processes. The gear unit 1 according to the present embodiment can therefore be efficiently produced. For example, production cost of the gear unit 1 is thus reduced, so that the gear unit 1 capable of changing the transmission ratio on the same axis can be mounted on, for example, relatively inexpensive products such as a bicycle and a motorcycle.

In the present embodiment, as shown in, for example, FIG. 5, the tilted shaft member 170 includes the first tilted member 171 and the second tilted member 172 which are disposed so as to face each other with the second axis Lb therebetween. Each of the first tilted member 171 and the second tilted member 172 has the tilted outer peripheral surface 170a, and the first tilted member 171 and the second tilted member 172 have similar shapes and sizes.

According to this configuration, the tilted shaft member 170 is formed by two members, namely the first tilted member 171 and the second tilted member 172. As shown in FIG. 5, the tilted shaft member 170 can thus be inserted between the inner peripheral surface 134a of the inner ring portion 131 and the outer peripheral surface of the input shaft 150 from opposite directions. That is, the first tilted member 171 and the second tilted member 172 each having the tilted outer peripheral surface 170a tilted with respect to the first axis La can be inserted like a wedge between the inner peripheral surface 134a of the inner ring portion 131 and the outer peripheral surface of the input shaft 150. This configuration makes it easier to increase the contact area of the tilted shaft member 170 with the inner peripheral surface 134a of the inner ring portion 131 as compared to the case where, for example, the inner ring portion 131 is fitted on the tilted shaft portion of the conventional shaft body. This improves effectiveness or reliability in fixing the inner ring portion 131 to the input shaft 150 via the tilted shaft member 170.

The tilted shaft member 170 disposed as described above is made of, for example, a resin such as polypropylene (PP), polycarbonate (PC), polyethylene (PE), polyphenylene sulfide resin (PPS), or polybutylene terephthalate (PBT). Accordingly, when the tilted shaft member 170 is inserted between the inner peripheral surface 134a of the inner ring portion 131 and the outer peripheral surface of the input shaft 150, the tilted shaft member 170 can be deformed such that its contact area with each of the inner ring portion 131 and the input shaft 150 is increased, without damaging the inner ring portion 131 and the input shaft 150. This also contributes to improving effectiveness or reliability in fixing the inner ring portion 131 to the input shaft 150 via the tilted shaft member 170.

As shown in, for example, FIGS. 6 and 7, the first tilted member 171 and the second tilted member 172 have similar shapes and sizes. Specifically, as shown in FIG. 7, each of the first tilted member 171 and the second tilted member 172 has a semicylindrical shape. The first and second tilted members 171, 172 are shaped so that the first and second tilted members 171, 172 together form a cylindrical shape with both ends open when disposed so as to face each other. In the present embodiment, as shown in FIG. 6, one of the first and second tilted members 171, 172 can be used as the other tilted member when rotated by 180° about the Y-axis. That is, the first and second tilted members 171, 172 that are made of, for example, a resin can be molded with the same mold. The first and second tilted members 171, 172 can therefore be mass-produced at low cost.

The expression "the first tilted member 171 and the second tilted member 172 have similar shapes and sizes" means that the shapes and sizes of the first and second tilted members 171, 172 are similar to such an extent that, for example, the first and second tilted members 171, 172 can be molded with the same mold or the first and second tilted members 171, 172 can be switched with each other, as described above. Based on this meaning, the word "similar" may be read as "the same." That is, the first tilted member 171 and the second tilted member 172 need not necessarily have exactly or completely the same shape and size. The above description regarding the word "similar" also applies to the expression "the first auxiliary member 181 and the second auxiliary member 182 have similar shapes and sizes" described later.

The first tilted member 171 and the second tilted member 172 need not necessarily have similar shapes and sizes. In the case where the tilted shaft member 170 is formed by a plurality of members, the members may include two members having different sizes or shapes from each other.

In the present embodiment, the input shaft 150 has the flange portion 155 that restricts movement of the intermediate gear 130. The gear unit 1 further includes the lock nut 152. The lock nut 152 is an example of a pressing member that presses the tilted shaft member 170 toward the flange portion 155.

According to this configuration, the position of the intermediate gear 130 in the axial direction of the input shaft 150 (the direction parallel to the first axis La) is regulated by the flange portion 155 and the lock nut 152. Moreover, a pressure in the direction toward the flange portion 155 can be constantly applied to the tilted shaft member 170 by the lock nut 152. The tilted shaft member 170 inserted like a wedge between the inner peripheral surface 134a of the inner ring portion 131 and the outer peripheral surface of the input shaft 150 thus more effectively fixes the inner ring portion 131 and more effectively reduces the clearance between the inner ring portion 131 and the input shaft 150.

More specifically, in the present embodiment, as shown, for example, in FIGS. 1 and 5, the gear unit 1 further includes the first auxiliary member 181 disposed between the lock nut 152 and the tilted shaft member 170. The lock nut 152 presses the tilted shaft member 170 toward the flange portion 155 via the first auxiliary member 181.

According to this configuration, for example, not the tilted shaft member 170 but the first auxiliary member 181 has a large surface that directly receives a pressing force from the lock nut 152. The shape of the tilted shaft member 170 can therefore be simplified. For example, the first auxiliary member 181 can be made of a resin, metal, etc. with higher rigidity than the material of the tilted shaft member 170. Accordingly, for example, when the lock nut 152 is firmly tightened, the first auxiliary member 181 that contacts the lock nut 152 will not be damaged and the tilted shaft member 170 is more reliably pushed into the clearance between the input shaft 150 and the inner ring portion 131.

The shapes and sizes of the flange portion 155 and the lock nut 152 are not limited to those shown in FIG. 5. For example, each of the flange portion 155 and the lock nut 152 may have a thickness larger than that shown in FIG. 5. The flange portion 155 and the lock nut 152 may have any shape and size as long as they can contact an object to be pressed (the inner ring portion 131 etc.). The flange portion 155 need not necessarily be a portion formed integrally with the input shaft 150. An annular component, which is a separate component from the input shaft 150, may be attached as the flange portion 155 to the input shaft 150. For example, the flange portion 155 may be an annular member having the input shaft 150 extending therethrough. In this case, the annular member is stopped by a step portion of the input shaft 150 so that movement of the annular member toward the second gear 120 is restricted. This annular member may be fixed to the input shaft 150 by a predetermined method such as welding, screwing, or plastic bonding.

In the present embodiment, as shown in FIGS. 5 and 6, the tilted shaft member 170 has a first pressed surface 171a on the lock nut 152 side. The first pressed surface 171a is tilted toward the lock nut 152 so as to be located closer to the lock nut 152 as it gets further away from the input shaft 150. The first auxiliary member 181 has a first pressing surface 181a that presses the first pressed surface 171a. The first pressing surface 181a is tilted in such a direction that it conforms to the first pressed surface 171a.

According to this configuration, as the first pressing surface 181a presses the first pressed surface 171a, a radially outward force is applied to the tilted shaft member 170. That is, a part of the pressing force applied from the lock nut 152 to the first auxiliary member 181 acts as a force pressing the tilted outer peripheral surface 170a of the tilted shaft member 170 against the inner peripheral surface 134a of the inner ring portion 131. The inner ring portion 131 is therefore more effectively fixed by the tilted shaft member 170.

The gear unit 1 according to the present embodiment further includes the second auxiliary member 182 disposed between the flange portion 155 and the tilted shaft member 170. As the lock nut 152 presses the tilted shaft member 170, the second auxiliary member 182 presses the tilted shaft member 170 toward the lock nut 152.

That is, the flange portion 155 is located on the opposite side of the tilted shaft member 170 from the lock nut 152, and the flange portion 155 presses the tilted shaft member 170 via the second auxiliary member 182 as a reaction to the pressing force of the lock nut 152. The tilted shaft member 170 is thus pushed into the clearance between the input shaft 150 and the inner ring portion 131 from both sides in the axial direction. The inner ring portion 131 is thus more effectively fixed by the tilted shaft member 170. Like the first auxiliary member 181, not the tilted shaft member 170 but the second auxiliary member 182 has a large surface that directly receives a pressing force from the flange portion 155. The shape of the tilted shaft member 170 can therefore be simplified. Like the first auxiliary member 181, the second auxiliary member 182 can be made of a resin, metal, etc. with higher rigidity than the material of the tilted shaft member 170. Accordingly, the tilted shaft member 170 is more reliably pushed into the clearance between the input shaft 150 and the inner ring portion 131 without causing damage to the second auxiliary member 182.

In the present embodiment, the first auxiliary member 181 and the second auxiliary member 182 have similar shapes and sizes. Specifically, as shown in FIG. 8, each of the first auxiliary member 181 and the second auxiliary member 182 has a semicircular shape. In the present embodiment, as shown in FIG. 6, one of the first and second auxiliary members 181, 182 can be used as the other auxiliary member when rotated by 180° about the Y-axis. That is, the first and second auxiliary members 181, 182 that are made of, for example, a resin can be molded with the same mold. The first and second auxiliary members 181, 182 can therefore be mass-produced at low cost.

The arrangement of the auxiliary members that press the tilted shaft member 170 in the axial direction is not limited to the above description. For example, a plurality of auxiliary members may be disposed on at least one of the flange portion 155 side and the lock nut 152 side of the tilted shaft member 170. That is, two or more auxiliary members may be disposed next to each other in the circumferential direction about the second axis Lb.

In the present embodiment, as shown in FIGS. 5 and 6, the tilted shaft member 170 has a second pressed surface 172a on the flange portion 155 side. The second pressed surface 172a is tilted toward the flange portion 155 so as to be located closer to the flange portion 155 as the tilted shaft member 170 gets further away from the input shaft 150. The second auxiliary member 182 has a second pressing surface 182a that presses the second pressed surface 172a. The second pressing surface 182a is tilted in such a direction to conform to the second pressed surface 172a.

According to this configuration, as the second pressing surface 182a presses the second pressed surface 172a, a radially outward force is applied to the tilted shaft member 170. That is, a part of the pressing force applied from the flange portion 155 to the second auxiliary member 182 acts as a force pressing the tilted outer peripheral surface 170a of the tilted shaft member 170 against the inner peripheral surface 134a of the inner ring portion 131. The inner ring portion 131 is therefore more effectively fixed by the tilted shaft member 170.

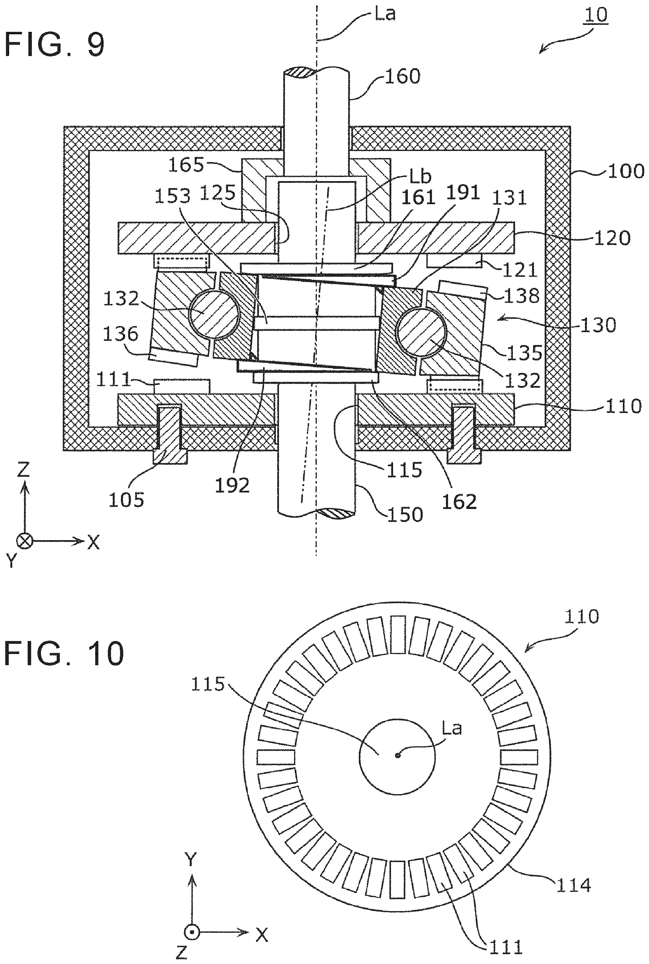

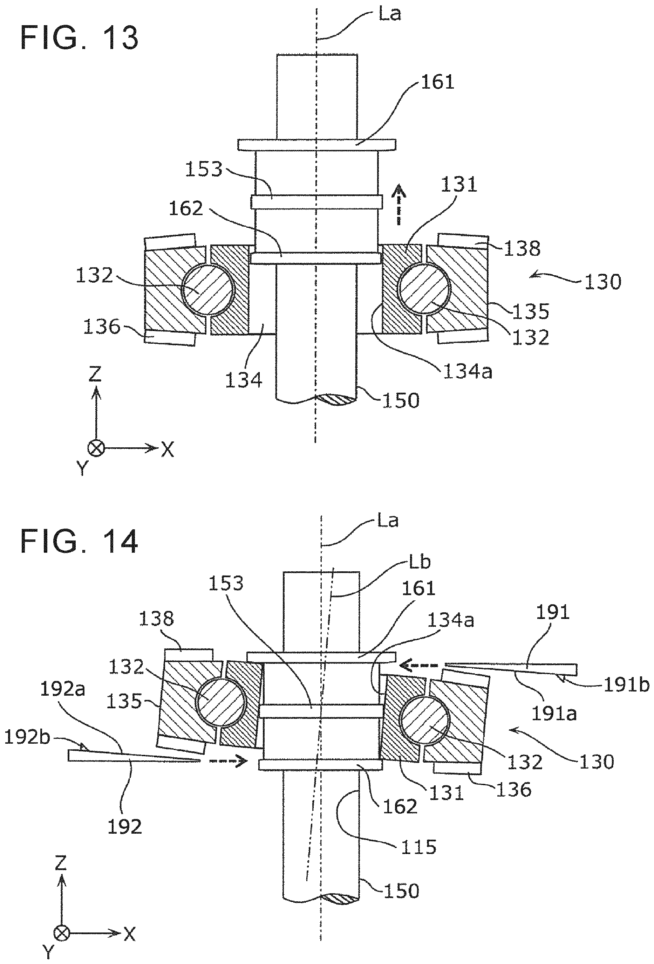

The general configuration of a gear unit 10 according to a second embodiment will be described with reference to FIGS. 9 to 12. FIG. 9 is a sectional view schematically illustrating the configuration of the gear unit 10 according to the second embodiment. Regarding an input shaft 150, an output shaft 160, a third tilted member 191, a fourth tilted member 192, and the teeth of each gear (110, 120, 130), not their sectional views but their side views are shown in FIG. 9. The basic structure of the gear unit 10 is simply illustrated in FIG. 9, and elements such as bearing units that rotatably support the input shaft 150 and the output shaft 160 are not shown in FIG. 9. The same applies to FIGS. 13 to 15 described later. In FIG. 9, the third tilted member 191 and the fourth tilted member 192 are shown by bold lines for easy identification.

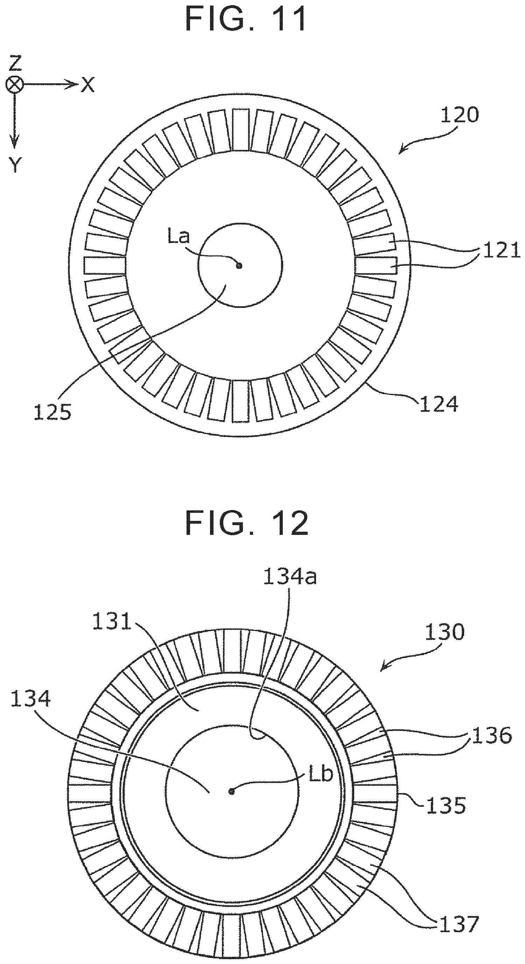

FIG. 10 is a plan view schematically illustrating the configuration of a first gear 110 according to the second embodiment. FIG. 11 is a plan view schematically illustrating the configuration of a second gear 120 according to the second embodiment. FIG. 12 is a plan view schematically illustrating the configuration of an intermediate gear 130 according to the second embodiment.

The gear unit 10 is a device that changes a received rotation angle, rotational force, or rotational speed and outputs the changed rotation angle, rotational force, or rotational speed. In the present embodiment, the gear unit 10 functions as a reduction gear that rotates the output shaft 160 at a lower rotational speed than that of the input shaft 150.

As shown in FIG. 9, the gear unit 10 includes the first gear 110, the second gear 120, and the intermediate gear 130. The first gear 110 and the second gear 120 are disk-shaped gears disposed about a first axis La. The intermediate gear 130 is a disc-shaped gear disposed about a second axis Lb between the first gear 110 and the second gear 120. The second axis Lb is tilted with respect to the first axis La. The intermediate gear 130 meshes with the first gear 110 and the second gear 120 so as to rotate one of the first and second gears 110, 120 differentially with respect to the other.

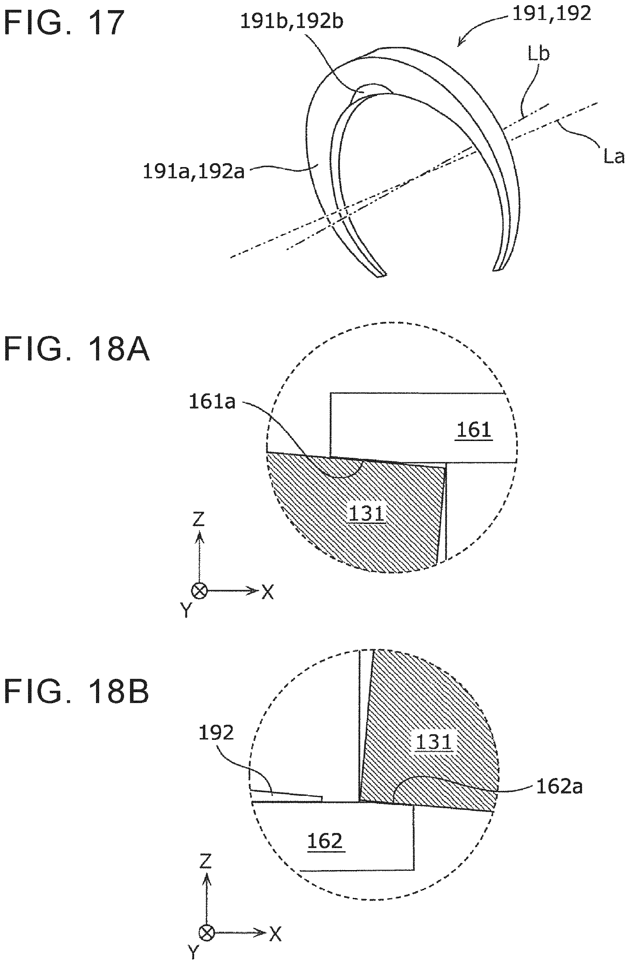

In FIGS. 9 to 18C (except FIG. 17), the entire gear unit 10 or a part of the gear unit 10 is illustrated in such an attitude that the first axis La is parallel to the Z-axis. In the following description, for example, the "direction of the first axis La" refers to a direction parallel to the first axis La and is synonymous with the "Z-axis direction."

As shown in FIGS. 9 and 10, the first gear 110 has a plurality of first teeth 111 facing the intermediate gear 130. Specifically, the first gear 110 has a first body portion 114 as its body, and the first body portion 114 has the first teeth 111 formed on its surface facing the intermediate gear 130. The first teeth 111 are formed next to each other so as to form an annular pattern. The first body portion 114 has a through hole 115 in its center, and the input shaft 150 extends through the through hole 115.

As shown in FIGS. 9 and 11, the second gear 120 has a plurality of second teeth 121 facing the intermediate gear 130. Specifically, the second gear 120 has a second body portion 124 as its body, and the second body portion 124 has the second teeth 121 formed on its surface facing the intermediate gear 130. The second teeth 121 are formed next to each other so as to form an annular pattern. The second body portion 124 has a through hole 125 in its center, and the input shaft 150 extends through the through hole 125.

As shown in FIGS. 9 and 12, the intermediate gear 130 has a plurality of first intermediate teeth 136 and a plurality of second intermediate teeth 138. The first intermediate teeth 136 mesh with the first teeth 111, and the second intermediate teeth 138 mesh with the second teeth 121. More specifically, the intermediate gear 130 has an inner ring portion 131 and an outer ring portion 135. The inner ring portion 131 is rotated with rotation of the input shaft 150, and the outer ring portion 135 is disposed so as to be rotatable relative to the inner ring portion 131. In the present embodiment, the outer ring portion 135 is rotatably supported by the inner ring portion 131 via a plurality of bearings 132. As shown in FIG. 9, the first intermediate teeth 136 and the second intermediate teeth 138 are formed in the outer ring portion 135. In the present embodiment, each of the first intermediate teeth 136 and the second intermediate teeth 138 is a protrusion between two recesses formed in the outer ring portion 135. For example, each of the first intermediate teeth 136 is a protrusion between two recesses 137 (see FIG. 12) each having a shape corresponding to the first tooth 111.

FIG. 12 shows only the structure on the first gear 110 side of the intermediate gear 130. Since the intermediate gear 130 has the same structure on both the first gear 110 side and the second gear 120 side, the structure on the second gear 120 side of the intermediate gear 130 is not shown in the figure.

In the gear unit 10 having a plurality of gears as described above, the intermediate gear 130 is fixed to the input shaft 150 that rotates about the first axis La. Specifically, the gear unit 10 includes the third tilted member 191 and the fourth tilted member 192 which are separate members from the input shaft 150. As shown in FIG. 9, the third tilted member 191 and the fourth tilted member 192 hold the inner ring portion 131 therebetween in such an attitude that the second axis Lb is the central axis of the inner ring portion 131. The intermediate gear 130 is thus fixed to the input shaft 150 such that the intermediate gear 130 is in a tilted attitude with respect to the input shaft 150 that rotates about the first axis La. Accordingly, when the input shaft 150 is rotated, the intermediate gear 130 meshes with the first gear 110 and the second gear 120 while making a precession motion. The intermediate gear 130 that makes a precession motion as described above is sometimes called as, for example, an "oscillating gear."

In the present embodiment, the input shaft 150 has a flange portion that holds the inner ring portion 131 in a tilted attitude. Specifically, the input shaft 150 has a first flange portion 161 and a second flange portion 162 which are located next to each other in the direction of the first axis La. The third tilted member 191 is disposed between the first flange portion 161 and the inner ring portion 131, and the fourth tilted member 192 is disposed between the second flange portion 162 and the inner ring portion 131. The first flange portion 161 and the second flange portion 162 thus function as portions that assist the third tilted member 191 and the fourth tilted member 192 in holding the inner ring portion 131 therebetween (i.e., portions that apply a holding force). Accordingly, it can also be said that the first flange portion 161 and the second flange portion 162 hold the inner ring portion 131 therebetween via the third tilted member 191 and the fourth tilted member192.

In the present embodiment, the input shaft 150 further has an intermediate flange portion 153 disposed between the first flange portion 161 and the second flange portion 162. The intermediate flange portion 153 is a portion that maintains the tilted attitude of the inner ring portion 131 with respect to the input shaft 150. As shown in FIG. 9, the intermediate flange portion 153 is designed to contact an inner peripheral surface 134a of a central opening 134 of the inner ring portion 131 (see FIG. 12).

The third and fourth tilted members 191, 192 and their surrounding structures will be described in detail later with reference to FIGS. 13 to 16.

In the present embodiment, the first gear 110, the second gear 120, and the intermediate gear 130 are accommodated in a housing 100, and the first gear 110 is fixed to the housing 100 with, for example, bolts 105 (see FIG. 9). The output shaft 160 is fixed to the second gear 120 via a connecting member 165, and the second gear 120 together with the output shaft 160 is rotatably held by the housing 100.

In the present embodiment, Z1 < Zm1 and Zm1 = Zm2 = Z2, where Z1 represents the number of first teeth 111, Z2 represents the number of second teeth 121, Zm1 represents the number of first intermediate teeth 136, and Zm2 represents the number of second intermediate teeth 138. For example, Z1 = 38 and Zm1 = Zm2 = Z2 = 40.

In this case, when the input shaft 150 is rotated, the intermediate gear 130 is rotated while maintaining its tilted attitude as shown in FIG. 9. At this time, the intermediate gear 130 is rotated while shifting its meshing position with the first gear 110 in the circumferential direction of the first gear 110. As described above, the number Zm1 of first intermediate teeth 136 of the intermediate gear 130 is larger than the number Z1 of first teeth 111 of the first gear 110 by 2. Accordingly, when the input shaft 150 makes one full rotation, the phase of the outer ring portion 135 having the first intermediate teeth 136 advances by the amount corresponding to the difference between Zm1 and Z1 (2). That is, when the input shaft 150 is rotated by 360°, the outer ring portion 135 is rotated by 360° × 2/40 = 18°. Accordingly, the outer ring portion 135 makes one full rotation for every 20 full rotations of the input shaft 150.

The number Zm2 of the second intermediate teeth 138 of the outer ring portion 135 is the same as the number Z2 of the second teeth 121 of the second gear 120 (40), and the second gear 120 is rotated in phase with the outer ring portion 135. That is, when the outer ring portion 135 makes one full rotation, the second gear 120 also makes one full rotation together with the outer ring portion 135. That is, for every 20 full rotations of the input shaft 150, the outer ring portion 135 makes one full rotation, and the second gear 120 and the output shaft 160 also make one full rotation together with the outer ring portion 135. The second gear 120 is thus rotated differentially with respect to the first gear 110. That is, the gear unit 10 of the present embodiment is a reduction gear in which the input shaft 150 and the output shaft 160 are arranged coaxially and the reduction ratio is 1/20.

For example, the gear unit 10 with this configuration is used as a power assist reduction gear in a power steering system. In this case, a shaft of a power assist motor is disposed on the first axis La that is the rotation axis of the input shaft 150, and the shaft of the motor and the input shaft 150 are connected. For example, the output shaft 160 is disposed so as to apply a rotational driving force via a gear etc. or directly to a steering shaft connected to a steering wheel.

The gear unit 10 thus reduces the speed of rotation on the same axis as the shaft of the motor. Accordingly, in the case where the gear unit 10 is used as, for example, a power assist reduction gear in a column assist power steering system, a power assist motor can be disposed parallel to, or parallel to and coaxially with, the steering shaft. For example, this configuration reduces the possibility that the power assist motor may reduce flexibility in arrangement of instruments etc. around a steering column. Applications of the gear unit 10 are not limited to power assist applications for power steering systems. The gear unit 10 may be used as a device for changing the transmission ratio in various devices or machines. For example, the gear unit 10 may be used as a power assist or driving reduction gear in a moving body such as a bicycle or a motorcycle, or as a reduction gear for driving lifting and lowering, moving, etc. of an object in industrial machinery.

In the gear unit 10 with this configuration, the intermediate gear 130 that rotates one of the first gear 110 and the second gear 120 differentially with respect to the other is fixed to the input shaft 150 via the third tilted member 191 and the fourth tilted member 192 such that the intermediate gear 130 is in a tilted attitude with respect to the input shaft 150, as described above. The third and fourth tilted members 191, 192 and their surrounding structures will further be described with reference to FIGS. 13 to 16.

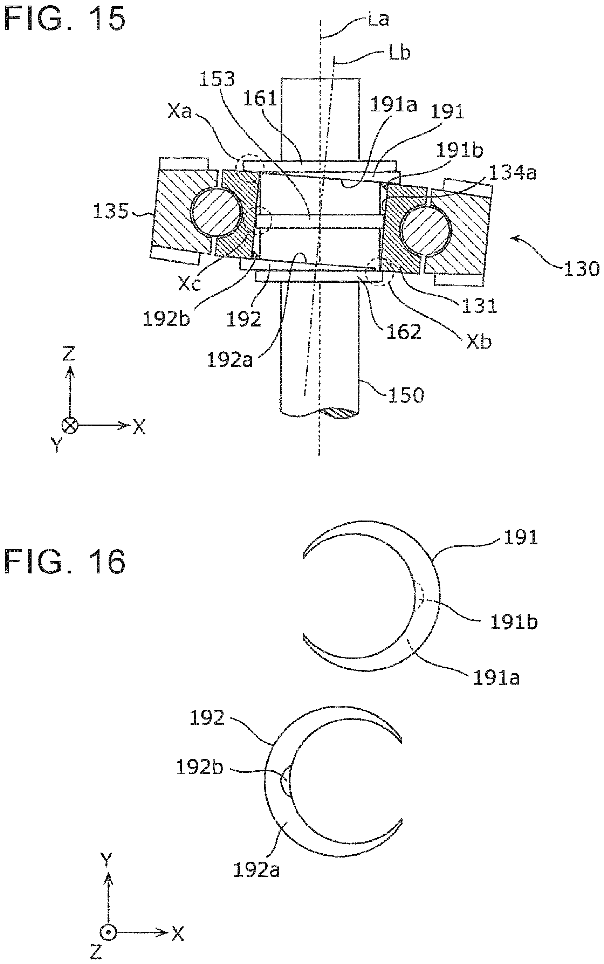

FIGS. 13 to 15 are first to third exploded sectional views of the gear unit 10 according to the present embodiment. Specifically, FIGS. 13 to 15 show only the sectional or side views of the input shaft 150, the intermediate gear 130, the third tilted member 191, and the fourth tilted member 192. FIG. 16 shows plan views of the third tilted member 191 and the fourth tilted member 192 according to the present embodiment (as viewed in the positive Z-axis direction). FIG. 17 is a perspective view illustrating the appearance of the third tilted member 191 or the fourth tilted member 192 according to the present embodiment. In FIG. 16, the third tilted member 191 and the fourth tilted member 192 are shown displaced from each other in the Y-axis direction in order to show the outer shape of each of the third tilted member 191 and the fourth tilted member 192. In the present embodiment, the third tilted member 191 and the fourth tilted member 192 are components of similar shapes and sizes. Accordingly, FIG. 17 shows only one of the third tilted member 191 and the fourth tilted member 192.

When fixing the intermediate gear 130 to the input shaft 150, the input shaft 150 is first inserted into the central opening 134 of the inner ring portion 131 as shown in FIG. 13, and the inner ring portion 131 is moved until the upper end of the inner ring portion 131 in FIG. 13 contacts the first flange portion 161. The second flange portion 162 and the intermediate flange portion 153 have a diameter that allows the second flange portion 162 and the intermediate flange portion 153 to pass through the central opening 134 of the inner ring portion 131. As shown in FIG. 14, the inner ring portion 131 is then tilted about the Y-axis until the upper and lower edges of the central opening 134 contact the input shaft 150.

The inner ring portion 131 is designed so that the inner ring portion 131 thus tilted about the Y-axis contacts the outer peripheral surface of the input shaft 150, the first flange portion 161, and the intermediate flange portion 153 on the left side of the first axis La in the section shown in FIG. 14 and contacts the outer peripheral surface of the input shaft 150, the second flange portion 162, and the intermediate flange portion 153 on the right side of the first axis La in the section shown in FIG. 14. That is, the inner ring portion 131 is designed to be supported at six positions in the section shown in FIG. 14. The inner ring portion 131 is therefore in such an attitude that the second axis Lb is the central axis of the inner ring portion 131. The inner ring portion 131 need not necessarily be actually supported at the six positions. Designing the sizes etc. of the inner ring portion 131 and the input shaft 150 as described above increases the possibility that the inner ring portion 131 may be supported at more than two positions. The attitude of the intermediate gear 130 with respect to the input shaft 150 is thus accurately regulated.

In order to maintain the attitude of the intermediate gear 130 with respect to the input shaft 150, the third tilted member 191 and the fourth tilted member 192 are attached to the input shaft 150 so as to hold the inner ring portion 131 of the intermediate gear 130 therebetween in the direction of the second axis Lb, as shown in FIG. 14. As shown in FIG. 15, the third tilted member 191 and the fourth tilted member 192 thus maintain the tilted attitude of the intermediate gear 130 with respect to the input shaft 150.

The third tilted member 191 and the fourth tilted member 192 have a curved shape conforming to the outer peripheral surface of the input shaft 150. More specifically, as shown in FIGS. 16 and 17, the third tilted member 191 and the fourth tilted member 192 are annular (C-shaped) members having a cutout. The input shaft 150 is inserted into each of the third tilted member 191 and the fourth tilted member 192 from its cutout portion. As the input shaft 150 is inserted into each of the third tilted member 191 and the fourth tilted member 192, each of the third tilted member 191 and the fourth tilted member 192 is elastically deformed by the input shaft 150 and is thus attached to the input shaft 150. The third tilted member 191 and the fourth tilted member 192 disposed as described above is made of, for example, a resin such as polypropylene (PP), polycarbonate (PC), polyethylene (PE), polyphenylene sulfide resin (PPS), or polybutylene terephthalate (PBT). Accordingly, when the third tilted member 191 is inserted between the inner ring portion 131 and the first flange portion 161, the third tilted member 191 can be deformed such that its contact area with each of the inner ring portion 131 and the first flange portion 161 is increased, without damaging the inner ring portion 131 and the first flange portion 161. Similarly, the fourth tilted member 192 can be deformed such that its contact area with each of the inner ring portion 131 and the second flange portion 162 is increased, without damaging the inner ring portion 131 and the second flange portion 162. This also contributes to improving effectiveness or reliability in fixing the inner ring portion 131 to the input shaft 150 via the third tilted member 191 and the fourth tilted member 192.

As described above, the gear unit 10 according to the present embodiment includes the first gear 110, the second gear 120, the input shaft 150, the intermediate gear 130, the third tilted member 191, and the fourth tilted member 192. The first gear 110 and the second gear 120 are disposed about the first axis La. The input shaft 150 is disposed so as to be rotatable about the first axis La. The intermediate gear 130 is disposed about the second axis Lb between the first gear 110 and the second gear 120, and the second axis Lb is tilted with respect to the first axis La. The intermediate gear 130 includes the inner ring portion 131 and the outer ring portion 135 that meshes with the first gear 110 and the second gear 120. The inner ring portion 131 is rotated with rotation of the input shaft 150, and the outer ring portion 135 is disposed so as to be rotatable relative to the inner ring portion 131. The third tilted member 191 and the fourth tilted member 192 are attached to the input shaft 150 and contact the opposite surfaces of the inner ring portion131 in the direction of the second axis Lb. The third tilted member 191 and the fourth tilted member 192 hold the inner ring portion 131 therebetween in such an attitude that the second axis Lb is the central axis of the inner ring portion 131.

According to this configuration, the third tilted member 191 and the fourth tilted member 192, which are separate components from the input shaft 150, are attached to the input shaft 150 to hold the intermediate gear 130 on the input shaft 150 and to allow the intermediate gear 130 to make a precession motion. The input shaft 150 can therefore be formed only by the shape of rotational symmetry about the first axis La. Accordingly, unlike the case where a shaft body in which a main shaft portion and a tilted shaft portion are formed integrally, such as the conventional shaft body to which an oscillating gear is fixed, is produced, the input shaft 150 can be accurately produced by a series of turning processes without changing the rotation axis of a metal body between the turning processes. The gear unit 10 according to the present embodiment can therefore be efficiently produced. For example, production cost of the gear unit 10 is thus reduced, so that the gear unit 10 capable of changing the transmission ratio on the same axis can be mounted on, for example, relatively inexpensive products such as a bicycle and a motorcycle.

More specifically, in the present embodiment, as shown in, for example, FIG. 15, the third tilted member 191 and the fourth tilted member 192 are attached to the input shaft 150 such that the thickest parts of the third and fourth tilted members 191, 192 are located at positions opposing each other with the first axis La therebetween, as viewed in the direction of the first axis La. That is, the third tilted member 191 presses one side of the inner ring portion 131 with respect to the input shaft 150 toward the first gear 110, and the fourth tilted member 192 presses the other side of the inner ring portion 131 with respect to the input shaft 150 toward the second gear 120. The inner ring portion 131 is thus fixed in a tilted attitude with respect to the input shaft 150. Accordingly, the intermediate gear 130 meshes with the first gear 110 and the second gear 120 while making a precession motion with rotation of the input shaft 150. The intermediate gear 130 thus rotates one of the first gear 110 and the second gear 120 differentially with respect to the other.

The shapes and sizes of the first flange portion 161 and the second flange portion 162 are not limited to those shown in FIG. 13. For example, each of the first flange portion 161 and the second flange portion 162 may have a thickness larger than that shown in FIG. 15. The first flange portion 161 and the second flange portion 162 may have any shape and size as long as they can directly or indirectly regulate the position and attitude of the inner ring portion 131.

In the present embodiment, as shown in, for example, FIGS. 15 to 17, each of the third tilted member 191 and the fourth tilted member 192 has a tilted surface 191a or 192a on the inner ring portion 131 side. The tilted surfaces 191a, 192a contact the inner ring portion 131 and tilt the inner ring portion 131 with respect to the first axis La.

According to this configuration, each of the third tilted member 191 and the fourth tilted member 192 holds the inner ring portion 131 by a surface rather than by a point. This configuration thus improves stability of the attitude of the intermediate gear 130.

In the present embodiment, as shown in, for example, FIGS. 15 to 18C, the input shaft 150 has the first flange portion 161 and the second flange portion 162 that are located next to each other in the direction of the first axis La. The third tilted member 191 and the fourth tilted member 192 have a curved shape conforming to the outer peripheral surface of the input shaft 150. The third tilted member 191 is disposed between the first flange portion 161 and the inner ring portion 131, and the fourth tilted member 192 is disposed between the second flange portion162 and the inner ring portion 131.

According to this configuration, the third tilted member 191 is disposed along the first flange portion 161 in the circumferential direction of the input shaft 150, and the fourth tilted member 192 is disposed along the second flange portion 162 in the circumferential direction of the input shaft 150. That is, the third tilted member 191 is disposed between the first flange portion 161 and the inner ring portion 131 such that the third tilted member 191 efficiently receives the pressing force from the first flange portion 161. Similarly, the fourth tilted member 192 is disposed between the second flange portion 162 and the inner ring portion 131 such that the fourth tilted member 192 efficiently receives the pressing force from the second flange portion 162. This configuration improves stability of the attitude of the intermediate gear 130. Moreover, with this configuration, the third tilted member 191 can be inserted like a wedge between the inner ring portion 131 and the first flange portion 161. Similarly, the fourth tilted member 192 can be inserted like a wedge between the inner ring portion 131 and the second flange portion 162. The third tilted member 191 and the fourth tilted member 192 thus biases the inner ring portion 131 from opposite directions. This configuration also contributes to improvement in stability of the attitude of the intermediate gear 130.

In the present embodiment, as shown in, for example, FIG. 15, the input shaft 150 has the intermediate flange portion 153 that contacts the inner peripheral surface 134a of the inner ring portion 131. According to this configuration, the intermediate flange portion 153 supports the inner ring portion 131 from inside the inner peripheral surface 134a in the section shown in, for example, FIG. 15. That is, the intermediate flange portion 153 supports the middle part in the axial direction (the direction of the second axis Lb) of the inner ring portion 131. This configuration thus improves, for example, accuracy or stability of the attitude of the intermediate gear 130.

In the present embodiment, as shown in, for example, FIGS. 15 to 17, each of the third tilted member 191 and the fourth tilted member 192 has a protrusion 191b, 192b that is inserted into the clearance between the input shaft 150 and the inner ring portion 131 having the central opening 134 through which the input shaft 150 extends.

As shown in, for example, FIG. 15, each of the protrusions 191b, 192b thus functions as a retainer for the third tilted member 191 or the fourth tilted member 192 attached to the input shaft 150. The third tilted member 191 and the fourth tilted member 192 are thus restrained from falling off from the input shaft 150. Moreover, the edge of the central opening 134 of the inner ring portion 131 is engaged with the protrusions 191b, 192b. This restrains counterclockwise rotation of the inner ring portion 131 about the Y-axis in FIG. 15. That is, each of the protrusion 191b, 192b functions also as a portion that maintains the attitude of the inner ring portion 131.

For example, the third tilted member 191 may have a plurality of protrusions 191b arranged in a direction along the outer peripheral surface of the input shaft 150. In this case, the edge of the central opening 134 of the inner ring portion 131 is engaged with the third tilted member 191 at a plurality of positions in the wide range in the longitudinal direction of the third tilted member 191 (the direction along the outer peripheral surface of the input shaft 150). The third tilted member 191 is thus more effectively restrained from falling off from the input shaft 150. Similarly, the fourth tilted member 192 may have a plurality of protrusions 192b arranged in a direction along the outer peripheral surface of the input shaft 150. In this case as well, the fourth tilted member 192 is more effectively restrained from falling off from the input shaft 150.

In the present embodiment, the third tilted member 191 and the fourth tilted member 192 have similar shapes and sizes. In the present embodiment, as shown in, for example, FIG. 16, one of the third and fourth tilted members 191, 192 can be used as the other tilted member when rotated by 180° about the Y-axis. That is, the third and fourth tilted members 191, 192 that are made of, for example, a resin can be molded with the same mold. The third and fourth tilted members 191, 192 can therefore be mass-produced at low cost.

The expression "the third tilted member 191 and the fourth tilted member 192 have similar shapes and sizes" means that the shapes and sizes of the third and fourth tilted members 191, 192 are similar to such an extent that, for example, the third and fourth tilted members 191, 192 can be molded with the same mold or the third and fourth tilted members 191, 192 can be switched with each other, as described above. Based on this meaning, the word "similar" may be read as "the same." That is, the third tilted member 191 and the fourth tilted member 192 need not necessarily have exactly or completely the same shape and size.

The third tilted member 191 and the fourth tilted member 192 need not necessarily have similar shapes and sizes. For example, the third tilted member 191 and the fourth tilted member 192 may have different sizes or shapes from each other.

In the present embodiment, a part of each flange portion (161, 162, 153) which contacts the inner ring portion 131 is tapered in order to make it easier to maintain the attitude of the inner ring portion 131. The tapered part of each flange portion will be described with reference to FIGS. 18A to 18C.

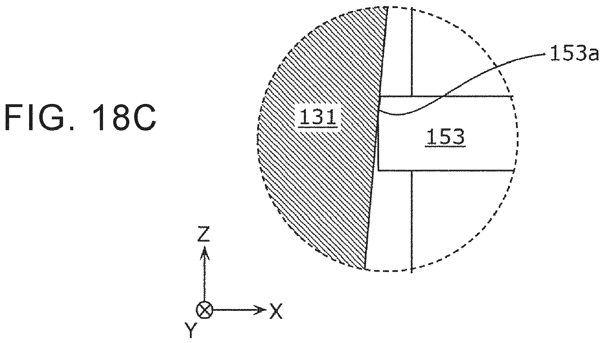

FIG. 18A is an enlarged view of a tapered part 161a of the first flange portion 161 according to the second embodiment. FIG. 18B is an enlarged view of a tapered part 162a of the second flange portion 162 according to the second embodiment. FIG. 18C is an enlarged view of a tapered part 153a of the intermediate flange portion 153 according to the second embodiment. Specifically, FIGS. 18A, 18B, and 18C are enlarged views of the regions Xa, Xb, and Xc shown by dashed circles in FIG. 15.

As shown in FIG. 18A, the first flange portion 161 has the tapered part 161a that contacts the inner ring portion 131. This configuration increases the contact area between the inner ring portion 131 and the first flange portion 161 as compared to the case where, for example, the first flange portion 161 does not have the tapered part 161a. That is, this configuration increases the possibility that the inner ring portion 131 and the first flange portion 161 may line-contact or surface-contact each other rather than point-contacting each other. This reduces the risk of the inner ring portion 131 being displaced with respect to the first flange portion 161 during, for example, operation of the gear unit 10. That is, stability of the attitude of the inner ring portion 131 is improved. Each of the tapered part 162a of the second flange portion 162 and the tapered part 153a of the intermediate flange portion 153 also has this effect.

That is, as shown in FIG. 18B, the second flange portion 162 has the tapered part 162a that contacts the inner ring portion 131. This configuration reduces the risk of the inner ring portion 131 being displaced with respect to the second flange portion 162. As shown in FIG. 18C, the intermediate flange portion 153 has the tapered part 153a that contacts the inner ring portion 131. This configuration reduces the risk of the inner ring portion 131 being displaced with respect to the intermediate flange portion 153. The tapered parts 162a, 153a also improve stability of the attitude of the inner ring portion 131.

Only one or two of the first flange portion 161, the second flange portion 162, and the intermediate flange portion 153 may have a tapered part. For example, at least one of the first flange portion 161 and the second flange portion 162 may have the tapered part 161a or 162a that contacts the inner ring portion 131.

Since the first flange portion 161 and the second flange portion 162 are disposed at such positions that the first flange portion 161 and the second flange portion 162 hold the inner ring portion 131 therebetween, the first flange portion 161 and the second flange portion 162 are very likely to actually contact the inner ring portion 131. Accordingly, the above effect of the tapered part is more likely to be obtained by forming a tapered part in at least one of the first and second flange portions 161, 162.

The tapered part 161a may be formed only in a part of the first flange portion 161 which contacts the inner ring portion 131 or may be formed in the peripheral edge of the first flange portion 161 along the entire circumference of the first flange portion 161. Forming the tapered part 161a in the peripheral edge of the first flange portion 161 along the entire circumference of the first flange portion 161 is easier as the tapered part 161a can be formed by turning. The same applies to the tapered parts 162a, 153a. That is, the tapered part 162a may be formed only in a part of the second flange portion 162 which contacts the inner ring portion 131 or may be formed in the peripheral edge of the second flange portion 162 along the entire circumference of the second flange portion 162. The tapered part 153a may be formed only in a part of the intermediate flange portion 153 which contacts the inner ring portion 131 or may be formed in the peripheral edge of the intermediate flange portion 153 along the entire circumference of the intermediate flange portion 153.

In the case where the input shaft 150 has the tapered parts 161a, 162a, 153a, the inner ring portion 131 need not necessarily contact all of the tapered parts 161a, 162a, 153a. For example, it is possible that the inner ring portion 131 may contact only one of the tapered parts 161a, 162a, 153a due to tolerance of the inner ring portion 131 and tolerance of the input shaft 150. Even in this case, the one of the tapered parts 161a, 162a, 153a which contacts the inner ring portion 131 contributes to improvement in stability of the attitude of the inner ring portion 131.

The gear unit according to the invention is described above based on the embodiments and modifications thereof. However, the invention is not limited to the above embodiments and modifications. Any forms of the invention which are implemented by applying various variations that occur to those skilled in the art to the embodiments or the modifications or by combining two or more of the components described above without departing from the spirit and scope of the invention fall within the scope of the invention.

For example, in the first embodiment, the tilted shaft member 170 need not necessarily be formed by a combination of a plurality of members and may be implemented by a single tubular member. The tilted shaft member 170 need not necessarily be divided in the circumferential direction of the input shaft 150 and may be divided in the axial direction of the input shaft 150. For example, the tilted shaft member 170 may be formed by a first tubular member disposed on the flange portion 155 side and a second tubular member disposed on the lock nut 152 side. In this case as well, each of the first tubular member and the second tubular member can be inserted like a wedge between the inner peripheral surface 134a of the inner ring portion 131 and the outer peripheral surface of the input shaft 150.

For example, a flame-retardant adhesive may be placed between the tilted shaft member 170 and at least one of the input shaft 150 and the inner ring portion 131 to increase the fixing force for fixing the inner ring portion 131 to the input shaft 150.

For example, in the case where required transmission torque is small, the flange portion 155, the lock nut 152, the first auxiliary member 181, and the second auxiliary member 182 may be omitted. In this case, it is preferable that the input shaft 150 be press-fitted in the first and second tilted members 171, 172 and the first and second tilted members 171, 172 be press-fitted in the inner ring portion 131. This configuration makes the clearance between the input shaft 150 and the first and second tilted members 171, 172 smaller than the clearance between the input shaft and the inner ring portion of the conventional gear unit due to the wedging effect.

In the first embodiment, the first gear 110 is fixed to the housing 100. However, the first gear 110 may be rotated about the first axis La. In this case, the output shaft 160 is rotated by the amount corresponding to the sum of rotation of the first gear 110 and differential rotation of the second gear 120 with respect to the first gear 110.

Regarding the first teeth 111, the first intermediate teeth 136, the second intermediate teeth 138, and the second teeth 121, the number of teeth and the shape of the teeth are not limited to those described and illustrated in the above embodiments and the figures. For example, the number of teeth, the shape of the teeth, etc. may be determined as appropriate according to the application of the gear unit 1, the capability required for the gear unit 1, the production cost of the gear unit 1, etc.

For example, in the second embodiment, the first flange portion 161 and the second flange portion 162 restrict movement of the third tilted member 191 and the fourth tilted member 192 in the direction away from the inner ring portion 131 along the first axis La. However, the input shaft 150 may not have the first flange portion 161 and the second flange portion 162. For example, the input shaft 150 may have an attachment groove formed in its outer peripheral surface along the entire circumference, and a C ring-shaped member may be fitted in the attachment groove, so that the third tilted member 191 or the fourth tilted member 192 is disposed on the input shaft 150. That is, the C ring-shaped member may have the same function as the first flange portion 161 and the third tilted member 191 according to the second embodiment. The C ring-shaped member may have the same function as the second flange portion 162 and the fourth tilted member 192 according to the second embodiment. In this case, the C ring-shaped member is preferably made of a metal in order to ensure that the C shaped-ring member has sufficient strength.

For example, each of the first flange portion 161 and the second flange portion 162 need not necessarily be a portion integral with the input shaft 150. An annular component, which is a separate component from the input shaft 150, may be attached as the first flange portion 161 or the second flange portion 162 to the input shaft 150. For example, a lock nut with a locking function, which is screwed on the input shaft 150, may be provided as the second flange portion 162. In this case, by tightening the second flange portion 162 with predetermined torque, the inner ring portion 131 can be fixed while pressing the third and fourth tilted members 191, 192. This improves stability of the attitude of the inner ring portion 131.

For example, the fixing force fixing the inner ring portion 131 to the input shaft 150 may be improved by placing, for example, a flame-retardant adhesive between the third and fourth tilted members 191, 192 and at least one of the input shaft 150 and the inner ring portion 131.

In the second embodiment, the first gear 110 is fixed to the housing 100. However, the first gear 110 may be rotated about the first axis La. In this case, the output shaft 160 is rotated by the amount corresponding to the sum of rotation of the first gear 110 and differential rotation of the second gear 120 with respect to the first gear 110.

Regarding the first teeth 111, the first intermediate teeth 136, the second intermediate teeth 138, and the second teeth 121, the number of teeth and the shape of the teeth are not limited to those described and illustrated in the above embodiments and the figures. For example, the number of teeth, the shape of the teeth, etc. may be determined as appropriate according to the application of the gear unit 10, the capability required for the gear unit 10, the production cost of the gear unit 10, etc.

The invention is useful as gear units that are mounted on, for example, moving bodies such as an automobile, and industrial machinery, etc.

## Claims

1. A gear unit (1; 10) comprising:
a first gear (110) and a second gear (120) that are disposed about a first axis (La);
an input shaft (150) disposed so as to be rotatable about the first axis (La); and
an intermediate gear (130) disposed between the first gear (110) and the second gear (120),
the intermediate gear (130) being disposed about a second axis (Lb) tilted with respect to the first axis (La),
the intermediate gear (130) including an inner ring portion (131) and an outer ring portion (135) disposed so as to be rotatable relative to the inner ring portion (131),
the inner ring portion (131) being configured to be rotated with rotation of the input shaft (150), and
the outer ring portion (135) being configured to mesh with the first gear (110) and the second gear (120).

2. The gear unit (1) according to claim 1, further comprising:
a tilted shaft member (170) that is a separate member from the input shaft (150) and that is disposed between an inner peripheral surface (134a) of the inner ring portion (131) and the input shaft (150), wherein
the tilted shaft member (170) includes a tilted outer peripheral surface (170a) that is an outer peripheral surface parallel to the second axis (Lb), and is configured to support the inner peripheral surface (134a) by the tilted outer peripheral surface (170a) to cause the intermediate gear (130) to make a precession motion with rotation of the input shaft (150).

3. The gear unit (1) according to claim 2, wherein
the tilted shaft member (170) includes a first tilted member (171) and a second tilted member (172) that are disposed so as to face each other with the second axis (Lb) between the first tilted member (171) and the second tilted member (172), and
each of the first tilted member (171) and the second tilted member (172) has the tilted outer peripheral surface (170a), and the first tilted member (171) and the second tilted member (172) have similar shapes and sizes.

4. The gear unit (1) according to claim 2 or 3, further comprising:
a pressing member (152) that presses the tilted shaft member (170) toward a flange portion (155), wherein
the flange portion (155) is provided on the input shaft (150) and is configured to restrict movement of the intermediate gear (130).

5. The gear unit (1) according to claim 4, further comprising:
a first auxiliary member (181) disposed between the pressing member (152) and the tilted shaft member (170), wherein
the pressing member (152) is configured to press the tilted shaft member (170) toward the flange portion (155) via the first auxiliary member (181).

6. The gear unit (1) according to claim 5, wherein
the tilted shaft member (170) includes a first pressed surface (171a) on a pressing member side, and the first pressed surface (171a) is tilted toward the pressing member (152) so as to be located closer to the pressing member (152) as the first pressed surface (171a) gets further away from the input shaft (150), and
the first auxiliary member (181) includes a first pressing surface (181a) tilted in such a direction that the first pressing surface (181a) conforms to the first pressed surface (171a), the first pressing surface (181a) being configured to press the first pressed surface (171a).

7. The gear unit (1) according to any one of claims 4 to 6, further comprising:
a second auxiliary member (182) disposed between the flange portion (155) and the tilted shaft member (170), wherein
the second auxiliary member (182) is configured to press the tilted shaft member (170) toward the pressing member (152) as the tilted shaft member (170) is pressed by the pressing member (152).

8. The gear unit (1) according to claim 7, wherein
the tilted shaft member (170) includes a second pressed surface (172a) on the flange portion (155) side, and the second pressed surface (172a) is tilted toward the flange portion (155) so as to be located closer to the flange portion (155) as the second pressed surface (172a) gets further away from the input shaft (150), and
the second auxiliary member (182) includes a second pressing surface (182a) tilted in such a direction that the second pressing surface (182a) conforms to the second pressed surface (172a), the second pressing surface (182a) being configured to press the second pressed surface (172a).

9. The gear unit (10) according to claim 1, further comprising:
a third tilted member (191) and a fourth tilted member (192) that are attached to the input shaft (150), wherein
the third tilted member (191) and the fourth tilted member (192) contact opposite surfaces of the inner ring portion (131) in a direction of the second axis (Lb), and
the third tilted member (191) and the fourth tilted member (192) are configured to hold the inner ring portion (131) between the third tilted member (191) and the fourth tilted member (192) in such an attitude that the second axis (Lb) is a central axis of the inner ring portion (131).

10. The gear unit (10) according to claim 9, wherein
each of the third tilted member (191) and the fourth tilted member (192) includes a tilted surface (191a, 192a) on the inner ring portion (131) side, and
the tilted surface (191a, 192a) contacts the inner ring portion (131) and tilts the inner ring portion (131) with respect to the first axis (La).

11. The gear unit (10) according to claim 9 or 10, wherein
the input shaft (150) includes a first flange portion (161) and a second flange portion (162) that are located next to each other in a direction of the first axis (La), and
the third tilted member (191) and the fourth tilted member (192) have a curved shape conforming to an outer peripheral surface of the input shaft (150), the third tilted member (191) being disposed between the first flange portion (161) and the inner ring portion (131), and the fourth tilted member (192) being disposed between the second flange portion (162) and the inner ring portion (131).

12. The gear unit (10) according to claim 11, wherein
at least one of the first flange portion (161) and the second flange portion (162) has a tapered part (161a, 162a) that contacts the inner ring portion (131).

13. The gear unit (10) according to any one of claims 9 to 12, wherein
the input shaft (150) includes an intermediate flange portion (153) that contacts an inner peripheral surface (134a) of the inner ring portion (131).

14. The gear unit (10) according to any one of claims 9 to 13, wherein
each of the third tilted member (191) and the fourth tilted member (192) includes a protrusion (191b, 192b) that is inserted in a clearance between an inner periphery of a central opening of the inner ring portion (131) and the input shaft (150), the input shaft (150) extending through the central opening of the inner ring portion (131).

15. The gear unit (10) according to any one of claims 9 to 14, wherein
the third tilted member (191) and the fourth tilted member (192) have similar shapes and sizes.
